# FASCICULE DE BREVET EUROPEEN

(11) **EP 1 450 031 B1**
(45) Date de publication et mention de la délivrance du brevet: **07.10.2009**
(21) Numéro de dépôt: 04290317.9
(22) Date de dépôt: 06.02.2004
(51) Int. Cl.: F02M 37/22

(54) **FILTRE A GAZOLE COMPRENANT DES MOYENS DE CHAUFFAGE DE GAZOLE**
Dieselkraftstofffilter mit Kraftstoffheizmittel
Diesel fuel filter with fuel heating means

(30) Priorité: 24.02.2003 FR 0302224
(43) Date de publication de la demande: 25.08.2004
(73) Titulaire: FILTRAUTO, 78286 Guyancourt Cedex (FR)
(72) Inventeur: Lalleman, Xavier, 94200 Ivry sur Seine (FR); Demaret, Emmanuel, 92300 Levallois-Perret (FR); Fremont, Laurent, 28410 BU (FR)
(74) Mandataire: Garel, Régis

(56) Documents cités:
- EP-A- 1 158 158
- GB-A- 2 140 319
- US-A- 4 501 255
- US-A- 4 596 224
- US-A- 4 861 966
- US-B1- 6 328 883

## Description

La présente invention se rapporte aux filtres à gazole comprenant des moyens de chauffage de gazole.

Le document GB-A-2.140.319 décrit un exemple de l'état de la technique.

Plus particulièrement, l'invention concerne parmi ces filtres à gazole, ceux qui comprennent un boîtier qui délimite un volume intérieur dans lequel est disposée une cartouche filtrante qui sépare le volume intérieur en une zone d'amont communiquant avec une entrée de gazole et en une zone d'aval communiquant avec une sortie de gazole. Ladite cartouche filtrante comprend un élément filtrant qui s'étend axialement entre, d'une part, une première extrémité fixée de manière étanche à un premier flasque rigide situé au voisinage de l'entrée de gazole, et d'autre part, une deuxième extrémité fixée de manière étanche à un deuxième flasque rigide. Le filtre à gazole comprend en outre une plaque interposée entre l'entrée de gazole et le premier flasque rigide de la cartouche filtrante, ladite plaque comprenant, d'une part, une première face formant avec le boîtier une première enceinte dans laquelle débouche l'entrée de gazole, ladite première face comprenant un premier dispositif de chauffage de gazole, et d'autre part, une deuxième face disposée en regard du premier flasque rigide. Ladite première enceinte présente en outre une ouverture traversante disposée de manière à permettre au gazole d'être en contact avec le premier dispositif de chauffage lors de son passage depuis l'entrée de gazole vers la cartouche filtrante.

Dans ces types de filtres à gazole connus, le dispositif de chauffage de gazole présente généralement de faibles dimensions ce qui implique que la surface de contact entre le gazole et ce dispositif de chauffage de gazole est limitée. Ceci est susceptible de provoquer un échauffement du gazole insuffisant pour garantir que l'élément filtrant ne soit pas colmaté par des particules de paraffine en suspension dans ledit gazole, notamment au démarrage du moteur par temps froid.

La présente invention a notamment pour but de pallier cet inconvénient.

A cet effet, selon l'invention, un filtre à gazole du genre en question est essentiellement caractérisé en ce que la deuxième face de la plaque comprend un deuxième dispositif de chauffage de gazole, en ce que le premier flasque rigide comprend une cloison saillante qui s'étend en direction de la plaque pour former avec au moins une partie la deuxième face de ladite plaque une deuxième enceinte dans laquelle est disposé le deuxième dispositif de chauffage de gazole, l'ouverture traversante de la première enceinte débouchant dans la deuxième enceinte, et en ce que la cloison saillante du premier flasque comprend un trou traversant disposé de manière à permettre au gazole d'être en contact avec le deuxième dispositif de chauffage lors de son passage depuis l'ouverture traversante de la première enceinte vers l'élément filtrant de la cartouche filtrante.

Grâce à ces dispositions, le deuxième dispositif de chauffage disposé dans la deuxième enceinte permet d'améliorer de façon sensible l'échauffement du gazole par le premier dispositif de chauffage disposé dans la première enceinte, notamment par temps particulièrement froid. De plus, la deuxième enceinte est directement formée par la coopération de la plaque avec la cloison saillante du premier flasque rigide de la cartouche filtrante, ce qui permet de ne pas introduire de nouveaux éléments afin de former cette deuxième enceinte.

Dans des modes de réalisation préférés de l'invention, on peut éventuellement avoir recours en outre à l'une et/ou à l'autre des dispositions suivantes :
- l'ouverture traversante de la première enceinte est réalisée sur la plaque ;
- la plaque est formée par une plaque de circuit imprimé qui comporte en outre au moins un composant électrique adapté pour interagir avec du liquide contenu dans le filtre ;
- le composant électrique est choisi parmi un capteur thermique et un détecteur d'eau destiné à être reliée à des électrodes qui s'étendent jusqu'à une collecte d'eau ;
- le boîtier du filtre présente une paroi annulaire disposée autour d'un axe central, et la plaque s'étendant perpendiculairement audit axe central et au-dessus du premier flasque de la cartouche filtrante ;
- l'élément filtrant et le premier flasque présentent une forme annulaire et délimite intérieurement la zone d'aval qui communique avec la sortie de gazole formée par un puits central formé dans le boîtier du filtre, la dite plaque étant disposée autour de ce puits central ;
- la cloison saillante du premier flasque comprend une portion périphérique externe et une portion périphérique interne reliées entre elles par deux portions radiales ;
- l'une au moins des portions périphériques externe et interne, et des portions radiales de la cloison saillante comprend un organe de positionnement qui s'emboîte dans un logement de forme complémentaire réalisé sur la plaque pour permettre un positionnement correcte de ladite plaque par rapport au premier flasque rigide ;
- le premier flasque comprend un rebord annulaire saillant en contact étanche avec le puits central formant la sortie de gazole ; et
- ladite cloison saillante du premier flasque est en contact étanche avec la deuxième face de la plaque.

D'autres caractéristiques et avantages de la l'invention apparaîtront au cours de la description suivante d'une de ses formes de réalisation, donnée à titre d'exemple non limitatif, en regard des dessins.

Sur les dessins :
- la figure 1 est une vue en coupe verticale selon la ligne I-I de la figure 2 du filtre à gazole conforme à l'invention,
- la figure 2 est une vue en coupe selon la ligne II-II de la figure 1,
- la figure 3 est une vue en perspective éclatée de la partie supérieure du filtre à gazole montrant notamment la disposition relative du premier flasque de la cartouche filtrante et de la plaque, et
- la figure 4 représente une vue de dessus en perspective du premier flasque de la cartouche filtrante du filtre à gazole.

Sur les différentes figures, les mêmes références désignent des éléments identiques ou similaires.

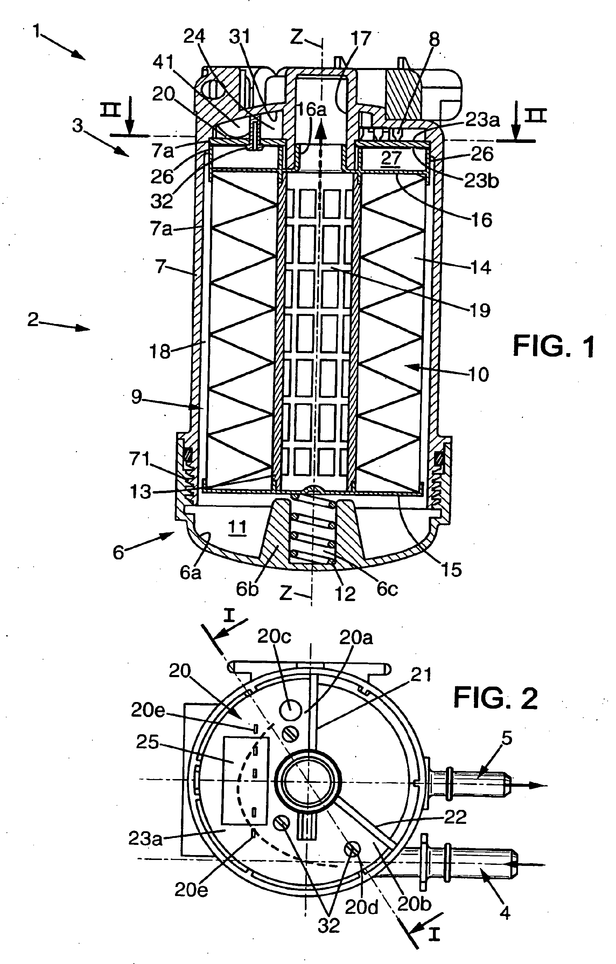

Les figures 1 et 2 représentent schématiquement un filtre à gazole 1 qui comporte un boîtier 2 présentant une partie supérieure 3 comprenant une entrée de gazole 4 ainsi qu'une sortie de gazole 5 (voir figure 2), ainsi qu'une partie inférieure 6 solidaire de la partie supérieure 3 dudit boîtier 2.

Cette partie supérieure 3 du boîtier 2 comprend également un élément tubulaire 7 de forme sensiblement cylindrique de révolution autour d'un axe vertical Z, cet élément tubulaire 7 délimitant une cuve 9 dans laquelle est disposée une cartouche filtrante 10.

Dans l'exemple considéré ici, l'élément tubulaire 7 s'étend vers le bas jusqu'à une extrémité inférieure 71 pourvue d'un filetage destiné à coopérer par vissage avec un taraudage réalisé sur la paroi interne 6a de la partie inférieure 6 du boîtier 2. Cette partie inférieure 6 du boîtier forme avec l'extrémité inférieure 71 de l'élément tubulaire 7, une zone de collecte d'eau 11 qui communique avec un dispositif de purge connu en soi (non représenté).

Ainsi, la partie inférieure 6 du boîtier 2 peut être dévissée de la partie supérieure 3 afin notamment de remplacer la cartouche filtrante 10 usagée par une nouvelle cartouche filtrante. La paroi interne 6a de la partie inférieure 6 du boîtier 2 comprend également une pluralité de pattes 6b délimitant un logement 6c dans lequel peut être logé à demeure un ressort 12 qui prend appui contre la cartouche filtrante 10 et qui la sollicite élastiquement vers le haut lorsque la partie inférieure 6 est vissée sur l'extrémité inférieure 71 de l'élément tubulaire 7 de la partie supérieure 3 du boîtier.

Selon une autre variante de réalisation, la cartouche filtrante 10 peut également prendre directement appui sur la pluralité de pattes 6b qui assure ainsi un support lorsque la partie inférieure 6 est vissée sur l'extrémité inférieure 71 de l'élément tubulaire 7.

Ainsi, les parties supérieure 3 et inférieure 6 du boîtier 2 délimitent un volume intérieur dans lequel est disposée la cartouche filtrante 10. Cette cartouche filtrante 10 comprend un élément filtrant 14 qui peut être notamment réalisé en papier plissé et qui présente une forme annulaire centrée sur l'axe de révolution Z. Cet élément filtrant 14 est disposé autour d'un tube perforé 13 qui délimite un espace intérieur creux. Par ailleurs, l'élément filtrant 14 s'étend dans la direction de l'axe Z entre une extrémité inférieure sur laquelle est rapporté un flasque inférieur 15 étanche qui obture vers le bas l'espace intérieur creux et une extrémité supérieure sur laquelle est rapporté de manière étanche un flasque supérieur 16 de forme annulaire qui présente un rebord annulaire interne 16a qui fait saillie vers le haut et qui s'engage de manière étanche dans un puits central 17 qui communique avec la sortie de gazole 5.

Selon encore une variante du système de maintien de la cartouche filtrante 10 dans l'élément tubulaire 7, on peut également prévoir de monter serrer le rebord annulaire interne 16a du flasque supérieur 16 de la cartouche filtrante 10 à l'intérieur du puits central 17 de la partie supérieure 3 du boîtier 2.

Ainsi, la cartouche filtrante 10 est interposée entre :
- l'entrée de gazole 4 qui communique avec l'extérieur de la cartouche filtrante 10, en formant une zone d'amont 18, par l'intermédiaire d'un orifice d'entrée 41 réalisée sur la paroi interne supérieure 31 de la paroi supérieure 3 du boîtier,
- et le puits central 17 qui est relié avec la sortie de gazole 5 et qui communique avec l'espace intérieur de la cartouche filtrante en formant une zone d'aval 19 qui recueille le gazole filtré.

Comme on peut le voir sur les figures 1 et 2, le filtre à gazole 1 comprend également une plaque 20 qui dans l'exemple considéré ici est formé par une plaque de circuit imprimé 20 qui est directement interposée entre la paroi interne supérieure 31 de la partie supérieure 3 du boîtier et le flasque supérieur rigide 16 de la cartouche filtrante 10. Cette plaque de circuit imprimée 20 présente une faible épaisseur et elle est disposée au moins en partie autour du puits central 17 reliée à la sortie de gazole 5. Cette plaque de circuit imprimé 20 prend également appui contre la paroi interne latérale 7a de l'élément tubulaire 7 de la partie supérieure 3 du boîtier 2.

Comme on peut le voir plus en détail sur la figure 2, la plaque de circuit imprimé 20 s'étend également circonférentiellement entre deux bords d'extrémité 20a, 20b qui viennent au contact de deux nervures 21, 22 reliant radialement le puits central 17 à la paroi interne 31 de la partie supérieure 3 du boîtier 2.

La plaque de circuit imprimé 20 est disposée en regard de l'orifice d'entrée 41 de gazole réalisé sur la paroi interne supérieure 31 du boîtier 2, et ladite plaque 20 ou plus exactement sa face supérieure 23a forme avec les nervures radiales 21 et 22 et avec la paroi interne supérieure 31 de la partie supérieure 3, une première enceinte 24 pour la réception du gazole provenant de l'entrée de gazole 4.

Cette face supérieure 23a de la plaque de circuit imprimé 20 comprend un premier dispositif de chauffage de gazole 25 (figure 2) qui peut notamment être formé par des éléments résistifs de type "PTC", c'est à dire à coefficient de température positif.

La plaque de circuit imprimé 20c comprend également un trou traversant 20c de manière à permettre la circulation du gazole depuis l'entrée de gazole 4 jusqu'à la cartouche filtrante 10. Ce trou traversant 20c peut notamment être disposé de manière à être sensiblement diamétralement opposé à l'orifice d'entrée 41 de gazole réalisé sur la paroi interne supérieure 31 du boîtier supérieure 2 de telle sorte que le gazole entrant parcourt le trajet le plus long dans la première enceinte 24 pour rester suffisamment en contact avec le premier dispositif de chauffage 25.

Afin de maintenir la plaque de circuit imprimé 20 sur la partie supérieure 3 du boîtier 2, ladite plaque est pourvue d'une pluralité de trous traversant 20d qui viennent s'emboîter, par exemple par clipsage, sur des plots 32 qui s'étendent vers le bas depuis la paroi interne supérieure 31 de la partie supérieure 3 du boîtier 2.

On peut également prévoir de fixer la plaque de circuit imprimé 20 sur la partie supérieure 3 du boîtier 2, en engageant les trous traversant 20d autour des plots 32 et en rapportant des vis (non représentées) dans les plots 32 afin de solidariser ladite plaque de circuit imprimé avec la partie supérieure 3 du boîtier 2.

Afin d'alimenter électriquement la plaque de circuit imprimé 20, la partie supérieure 3 du boîtier 2 peut également comporter un connecteur externe (non représenté) comportant des broches qui traversent avec étanchéité la partie supérieure 3 du boîtier 2 et qui s'étendent jusqu'à des extrémités intérieures 8 situées dans la première enceinte 24, la plaque de circuit imprimé 20 comportant par ailleurs des broches complémentaires 20e qui coopèrent avec les extrémités intérieures 8 des broches du connecteur externe pour raccorder électriquement ladite plaque de circuit imprimé 20 avec le connecteur externe.

On peut également prévoir de souder les broches du connecteur externe directement sur la plaque de circuit imprimé.

La plaque de circuit imprimé peut également comporter d'autres composants électriques tels qu'un capteur thermique et/ou un détecteur d'eau destiné à être relié à des électrodes qui s'étendent vers le bas jusqu'à la zone de collecte d'eau 11.

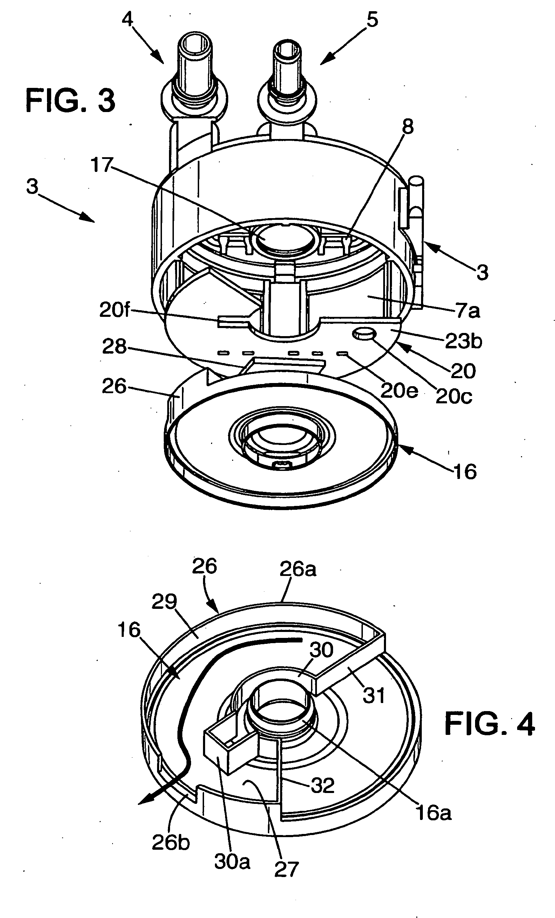

Comme on peut le voir sur les figures 3 et 4, le flasque supérieur 16 de la cartouche filtrante 10 comprend au niveau de sa face supérieure une cloison saillante 26 qui s'étend en direction de la face inférieure 23b de la plaque 20 pour former avec au moins une partie de cette face inférieure 23b une deuxième enceinte 27 dans laquelle débouche le trou traversant 20c réalisé sur la plaque 20. Par ailleurs, la face inférieure 23b de la plaque 20 comprend également un deuxième dispositif de chauffage de gazole 28 disposé de telle sorte qu'il soit contenu dans la deuxième enceinte 27 formé par la cloison saillante 26 du flasque supérieur 16 et la face inférieure 23b de la plaque 20. Lors de la mise en place de la cartouche filtrante 10 dans le boîtier 2, par exemple, par vissage de la partie inférieure 6 dudit boîtier, le rebord supérieur 26a de la cloison saillante 26 vient au contact ou alors sensiblement affleurer la face inférieure 23b de la plaque 20 de manière à former ladite deuxième enceinte 27. Selon une variante de réalisation, on peut également prévoir que la face interne de la cloison saillante 26 soit en contact étanche avec la tranche ou le bord périphérique de la plaque. Dans ce cas, la plaque 20 présente des dimensions légèrement inférieures à celles de la cloison saillante 26 de manière à assurer l'étanchéité. Par ailleurs, comme on peut le voir sur la figure 4, la cloison saillante 26 comprend une ouverture traversante 26b destinée à former avec la face inférieure 23b de la plaque 20 une sortie pour le gazole en direction de l'extérieur de la cartouche filtrante 10. Cette ouverture traversante 26b est disposée de telle manière qu'elle soit sensiblement diamétralement opposée à l'ouverture traversante 20c réalisée dans la plaque 20 pour permettre au gazole d'être au contact le plus longtemps possible avec le deuxième dispositif de chauffage 28 lors de son passage depuis l'ouverture traversante 20c de la plaque vers ladite ouverture traversante 26b.

La cloison saillante 26 du flasque supérieur 16 de la cartouche filtrante comprend, comme on peut le voir sur la figure 4, une portion périphérique externe 29, une portion périphérique interne 30 et deux portions radiales 31, 32 qui relient entre elles les portions périphériques externe 29 et interne 30. Les portions périphériques externe 29 et interne 30 sont disposées concentriquement par rapport au rebord annulaire saillant 16a qui est en contact étanche avec le puits central 17 formant la sortie de gazole.

Par ailleurs, comme on peut le voir sur la figure 3, la face inférieure du flasque supérieur 16 destinée à être au contact de l'élément filtrant 9 comprend un rebord externe saillant 16b et un rebord interne saillant 16c qui sont destinés à entourer de manière étanche l'extrémité supérieure de l'élément filtrant 9.

Par ailleurs, la portion périphérique interne 30 de la cloison saillante 26 comprend également un organe de positionnement 30a qui est destiné à venir s'emboîter dans un logement 20f de forme complémentaire réalisé sur la plaque de circuit imprimé 20. Cet organe de positionnement présente une hauteur légèrement supérieure à celle de la cloison saillante de telle sorte qu'il s'emboîte dans le logement 20f de la plaque 20. Cet élément de positionnement 30a permet d'assurer un positionnement correct de la plaque de telle sorte que seule la face inférieure 23b de la plaque 20 soit en regard du flasque supérieur 16 de la cartouche filtrante 10. Selon une variante de réalisation non représentée, l'organe de positionnement peut être réalisé sur la paroi interne du boîtier de manière à coopérer directement avec un logement de forme complémentaire réalisé sur la plaque 20. Ainsi, le gazole qui arrive dans la première enceinte 24 passe nécessairement au contact du premier dispositif de chauffage de gazole 25 pour être ensuite amené dans la deuxième enceinte 27, par l'intermédiaire du trou traversant 20c, pour être à nouveau au contact du deuxième dispositif de chauffage 28 avant d'être évacuer vers l'extérieur de la cartouche filtrante par l'ouverture traversante 26b réalisée dans la cloison saillante 26. Les première et deuxième enceintes 24, 27 forment ainsi une boucle de chauffage qui permet, grâce à la présence des deux dispositifs de chauffage 25, 28 disposés respectivement sur les faces supérieure 23a et inférieure 23b de la plaque, un échauffement suffisant du gazole pour garantir que l'élément filtrant 9 de la cartouche filtrante 10 ne soit pas colmaté par des particules de paraffine en suspension dans le gazole.

L'ensemble du flasque supérieur 16 et de la cloison saillante 26 ainsi que les rebords internes saillants 16a, 16c et le rebord externe 16b sont de préférence réalisés d'une seule pièce par exemple par moulage de matière plastique.

La plaque 20 peut également être formée par une plaque métallique sur laquelle sont rapportés les premier et deuxième dispositifs de chauffage de gazole formés par exemple par des résistances chauffantes de type, la plaque métallique 20 diffusant alors la chaleur au gazole.

Par ailleurs, on peut également disposer une autre ou plusieurs plaques au-dessus de la plaque 20 de manière à former un ou plusieurs compartiments à l'intérieur de la première enceinte pour définir une ou plusieurs boucles de réchauffement du gazole, chaque compartiment étant pourvu d'au moins un dispositif de chauffage de gazole. Dans ce cas, et conformément à l'invention, la plaque inférieure 20 sera directement destinée à coopérer avec la cloison saillante 26 du flasque supérieur de la cartouche filtrante en formant ainsi la deuxième enceinte 27 pour améliorer encore l'échauffement du gazole, et ce sans rapporter d'élément supplémentaire entre ladite plaque et le flasque supérieur.

## Revendications

1. Filtre à gazole comprenant un boîtier (2) qui délimite un volume intérieur dans lequel est disposée une cartouche filtrante (10) qui sépare le volume intérieur en une zone d'amont (18) communiquant avec une entrée de gazole (4) et en une zone d'aval (19) communiquant avec une sortie de gazole (5), ladite cartouche filtrante (10) comprenant un élément filtrant (9) qui s'étend axialement entre, d'une part, une première extrémité fixée de manière étanche à un premier flasque rigide (16) situé au voisinage de l'entrée de gazole (4), et d'autre part, une deuxième extrémité fixée de manière étanche à un deuxième flasque rigide (15), le filtre à gazole comprenant en outre une plaque (20) interposée entre l'entrée de gazole (4) et le premier flasque rigide (16) de la cartouche filtrante, ladite plaque (20) comprenant, d'une part, une première face (23a) formant avec le boîtier (2) une première enceinte (24) dans laquelle débouche l'entrée de gazole (4), ladite première face (23a) comprenant un premier dispositif de chauffage de gazole (25), et d'autre part, une deuxième face (23b) disposée en regard du premier flasque rigide (16), ladite première enceinte (24) présentant en outre une ouverture traversante (20c) disposée de manière à permettre au gazole d'être en contact avec le premier dispositif de chauffage (25) lors de son passage depuis l'entrée de gazole (4) vers la cartouche filtrante (10),
**caractérisé en ce que** la deuxième face (23b) de la plaque (20) comprend un deuxième dispositif de chauffage de gazole (28), **en ce que** le premier flasque rigide (16) comprend une cloison saillante (26) qui s'étend en direction de la plaque (20) pour former avec au moins une partie la deuxième face (23b) de ladite plaque une deuxième enceinte (27) dans laquelle est disposé le deuxième dispositif de chauffage de gazole (28), l'ouverture traversante (20c) de la première enceinte (24) débouchant dans la deuxième enceinte (27), et **en ce que** la cloison saillante (26) du premier flasque (16) comprend un trou traversant (26b) disposé de manière à permettre au gazole d'être en contact avec le deuxième dispositif de chauffage (28) lors de son passage depuis l'ouverture traversante (20c) de la première enceinte (24) vers l'élément filtrant (9) de la cartouche filtrante (10).

2. Filtre selon la revendication 1, dans lequel l'ouverture traversante (20c) de la première enceinte est réalisée sur la plaque (20).

3. Filtre selon l'une ou l'autre des revendications 1 et 2, dans lequel la plaque (20) est formée par une plaque de circuit imprimé qui comporte en outre au moins un composant électrique adapté pour interagir avec du liquide contenu dans le filtre.

4. Filtre selon la revendication 3, dans lequel le composant électrique est choisi parmi un capteur thermique et un détecteur d'eau destiné à être reliée à des électrodes qui s'étendent jusqu'à une collecte d'eau (11).

5. Filtre selon l'une quelconque des revendications précédentes, dans lequel le boîtier (2) du filtre présente une paroi annulaire (7) disposée autour d'un axe central (Z), et la plaque s'étendant perpendiculairement audit axe central et au-dessus du premier flasque (16) de la cartouche filtrante (10).

6. Filtre selon l'une quelconque des revendications précédentes, dans lequel l'élément filtrant (9) et le premier flasque (16) présentent une forme annulaire et délimite intérieurement la zone d'aval (19) qui communique avec la sortie de gazole formée par un puits central (17) formé dans le boîtier (2) du filtre, ladite plaque (20) étant disposée autour de ce puits central (17).

7. Filtre selon la revendication 6, dans lequel la cloison saillante (26) du premier flasque (16) comprend une portion périphérique externe (29) et une portion périphérique interne (30) reliées entre elles par deux portions radiales (31, 32).

8. Filtre selon la revendication 7, dans lequel l'une au moins des portions périphériques externe (29) et interne (30), et des portions radiales (31, 32) de la cloison saillante (26) comprend un organe de positionnement (30a) qui s'emboîte dans un logement (20f) de forme complémentaire réalisé sur la plaque (20) pour permettre un positionnement correcte de ladite plaque (20) par rapport au premier flasque rigide (16).

9. Filtre selon l'une quelconque des revendications 6 à 8, dans lequel le premier flasque (16) comprend un rebord annulaire saillant (16a) en contact étanche avec le puits central (17) formant la sortie de gazole.

10. Filtre selon l'une quelconque des revendications précédentes, dans lequel ladite cloison saillante (26) du premier flasque (16) est en contact étanche avec la deuxième face (23b) de la plaque (20).

## Claims

1. Diesel fuel filter comprising a housing (20) which delimits an internal volume in which is disposed a filter cartridge (10) that separates the internal volume into an upstream zone (18) communicating with a diesel fuel inlet (4) and a downstream zone (19) communicating with a diesel fuel outlet (5), said filter cartridge (10) comprising a filter element (9) which extends axially between on the one hand a first end fixed in a sealed manner to a first rigid flange (16) situated in the vicinity of the diesel fuel inlet (4) and on the other hand a second end fixed in a sealed manner to a second rigid flange (15), the diesel fuel filter further comprising a plate (20) interposed between the diesel fuel inlet (4) and the first rigid flange (16) of the filter cartridge, said plate (20) comprising on the one hand a first face (23a) forming with the housing (2) a first chamber (24) into which the diesel fuel inlet (4) opens, said first face (23a) comprising a first diesel fuel heating device (25), and on the other hand a second face (23b) disposed facing the first rigid flange (16), said first chamber (24) also having a through opening (20c) disposed in such a way as to enable the diesel fuel to be in contact with the first heating device (25) as it passes from the diesel fuel inlet (4) to the filter cartridge (10), **characterised in that** the second face (23b) of the plate (20) comprises a second diesel fuel heating device (28), that the first rigid flange (16) comprises a projecting partition (26) which extends in the direction of the plate (20) in order to form with at least one part of the second face (23b) of said plate a second chamber (27) in which is disposed the second diesel fuel heating device (28), the through opening (20c) of the first chamber (24) opening into the second chamber (27), and that the projecting partition (26) of the first flange (16) comprises a through hole (26b) disposed in such a way as to enable the diesel fuel to be in contact with the second heating device (28) as it passes from the through opening (20c) of the first chamber (24) to the filter element (9) of the filter cartridge (10).

2. Filter as claimed in Claim 1, wherein the through opening (20c) of the first chamber is produced on the plate (20).

3. Filter as claimed in either Claim 1 or Claim 2, wherein the plate (20) is formed by a printed circuit board which further includes at least one electrical component adapted to interact with liquid contained in the filter.

4. Filter as claimed in Claim 3, wherein the electrical component is chosen from amongst a heat sensor and a water detector intended to be connected to electrodes which extend as far as a water collector (11).

5. Filter as claimed in any one of the preceding claims, wherein the housing (2) of the filter has an annular wall (7) disposed around a central axis (Z), and the plate extends perpendicular to said central axis and above the first flange (16) of the filter cartridge (10).

6. Filter as claimed in any one of the preceding claims, wherein the filter element (9) and the first flange (16) have an annular shape and internally delimit the downstream zone (19) which communicates with the diesel fuel outlet formed by a central well (17) formed in the housing (2) of the filter, said plate (20) being disposed around this central well (17).

7. Filter as claimed in Claim 6, wherein the projecting partition (26) of the first flange (16) comprises an external peripheral portion (29) and an internal peripheral portion (30) connected to one another by two radial portions (31, 32).

8. Filter as claimed in Claim 7, wherein at least one of the external and internal peripheral portions (29, 30) and radial portions (31, 32) of the projecting partition (26) comprises a positioning element (30a) which fits into a receptacle (20f) of complementary shape produced on the plate (20) in order to enable correct positioning of said plate (20) with respect to the first rigid flange (16).

9. Filter as claimed in any one of Claims 6 to 8, wherein the first flange (16) comprises a projecting annular rim (16a) in sealed contact with the central well (17) forming the diesel fuel outlet.

10. Filter as claimed in any one of the preceding claims, wherein said projecting partition (26) of the first flange (16) is in sealed contact with the second face (23b) of the plate (20).

## Patentansprüche

1. Dieselkraftstofffilter mit einem Gehäuse (2), das ein Innenvolumen begrenzt, in dem sich eine Filterkartusche (10) befindet, die das Innenvolumen in einen stromaufwärts liegenden Bereich (18), der mit dem Dieselkraftstoffeintritt (4) in Verbindung steht, und einen stromabwärts liegenden Bereich (19), der mit einem Dieselkraftstoffaustritt (5) in Verbindung steht, unterteilt, wobei die Filterkartusche (10) ein Filterelement (9) aufweist, das sich in Axialrichtung zwischen einerseits einem ersten Endabschnitt, der in dichter Weise an einer ersten starren Seitenwand (16) befestigt ist, die sich benachbart zum Dieselkraftstoffeintritt (4) befindet, und andrerseits einem zweiten Endabschnitt erstreckt, der in dichter Weise an einer zweiten Seitenwand (15) befestigt ist, wobei der Dieselkraftstofffilter ferner eine Platte (20) aufweist, die zwischen den Dieselkraftstoffeintritt (4) und die erste starre Seitenwand (16) der Filterkartusche zwischengefügt ist, wobei die Platte (20) einerseits eine erste Fläche (23a), die mit dem Gehäuse (2) einen ersten Mantel (24) bildet, in den der Dieselkraftstoffeintritt (4) mündet, wobei die erste Fläche (23a) eine erste Heizvorrichtung (25) für Dieselkraftstoff hat, und andrerseits eine zweite Fläche (23b), die der ersten starren Seitenwand (16) zugewandt ist, aufweist, wobei der erste Mantel (24) ferner eine durchquerende Öffnung (20c) aufweist, die in einer solche Weise angeordnet ist, um zu gestatten, dass sich der Dieselkraftstoff bei seinem Durchgang vom Dieselkraftstoffeintritt (4) zur Filterkartusche (10) hin mit der ersten Heizvorrichtung (25) in Berührung befindet.
**dadurch gekennzeichnet, dass** die zweite Fläche (23b) der Platte (20) eine zweite Heizvorrichtung (28) für Dieselkraftstoff aufweist, dass die erste starre Seitenwand (16) eine hervortretende Wand (26) aufweist, die sich in Richtung der Platte (20) erstreckt, um mit zumindest einem Teil der zweiten Fläche (23b) der Platte einen zweiten Mantel (27) zu bilden, in dem sich die zweiten Heizvorrichtung (28) für Dieselkraftstoff befindet, wobei die durchquerende Öffnung (20c) des ersten Mantels (24) in den zweiten Mantel (27) mündet, und dass die hervortretende Wand (26) der ersten Seitenwand (16) ein durchquerendes Loch (26b) aufweist, das in einer solchen Weise angeordnet ist, um zu gestatten, dass der Dieselkraftstoff mit der zweiten Heizvorrichtung (28) in Berührung steht, wenn dieser von der durchquerenden Öffnung (20c) des ersten Mantels (24) her zum Filterelement (9) der Filterkartusche (10) läuft.

2. Filter nach Anspruch 1, wobei die durchquerende Öffnung (20c) des ersten Mantels auf der Platte (20) umgesetzt ist.

3. Filter nach einem der Ansprüche 1 und 2, wobei die Platte (20) durch eine gedruckte Schaltungsplatte gebildet ist, die ferner zumindest ein elektrisches Bauteil aufweist, das angepasst ist, um mit der im Filter enthaltenen Flüssigkeit in Wechselwirkung zu treten.

4. Filter nach Anspruch 3, wobei das elektrische Bauteil aus einem thermischen Messfühler und einer Wassererfassungseinrichtung ausgewählt wurde, die dazu bestimmt ist, mit Elektroden verbunden zu werden, die sich bis zu einer Wassererfassung (11) erstrecken.

5. Filter nach einem der vorhergehenden Ansprüche, wobei das Filtergehäuse (2) eine ringförmige Wand (7) aufweist, die sich um die Mittelachse (Z) herum befindet, und sich die Platte senkrecht zur Mittelachse und oberhalb der ersten Seitenwand (16) der Filterkartusche (10) erstreckt.

6. Filter nach einem der vorhergehenden Ansprüche, wobei das Filterelement (9) und die erste Seitenwand (16) eine Ringform aufweisen und innen den stromabwärts liegenden Bereich (19) abgrenzen, der mit dem Dieselkraftstoffaustritt in Verbindung steht, der durch ein im Gehäuse (2) des Filters ausgebildetes Mittelloch (17) in Verbindung steht, wobei sich die Platte (20) um dieses Mittelloch (17) herum befindet.

7. Filter nach Anspruch 6, wobei die hervortretende Wand (26) der ersten Seitenwand (16) einen äußeren Umfangsabschnitt (29) und einen inneren Umfangsabschnitt (30) aufweist, die durch zwei Radialabschnitte (31, 32) miteinander verbunden sind.

8. Filter nach Anspruch 7, wobei zumindest einer von äußerem Umfangsabschnitt (29) und innerem Umfangsabschnitt (30) und Radialabschnitte (31, 32) der hervortretenden Wand (26) eine Positioniereinrichtung (30a) aufweist, die in eine Aufnahmeeinrichtung (20f) mit Komplementärform eingreift, die an der Platte (20) ausgebildet ist, um eine korrekte Positionierung der Platte (20) in Bezug auf die erste starre Seitenwand (16) zu gestatten.

9. Filter nach einem der Ansprüche 6 bis 8, wobei die erste Seitenwand (16) einen hervortretenden ringförmigen Rand (16a) in dichtem Kontakt mit dem Mittelloch (17) den Dieselkraftstoffaustritt bildend aufweist.

10. Filter nach einem der vorstehenden Ansprüche, wobei die hervortretende Wand (26) der ersten Seitenwand (16) in dichtem Kontakt mit der zweiten Fläche (23b) der Platte (20) steht.
